# FASCICULE DE BREVET EUROPEEN

(11) **EP 3 206 912 B1**
(45) Date de publication et mention de la délivrance du brevet: **29.08.2018**
(21) Numéro de dépôt: 15785164.3
(22) Date de dépôt: 09.10.2015
(51) Int. Cl.: B60R 7/04

(54) **AGENCEMENT DE CLOISONNEMENT D'UN COFFRE LONGITUDINAL DE PAVILLON DE VÉHICULE**
ANORDNUNG ZUR AUFTEILUNG EINES LÄNGLICHEN FACHS FÜR DAS KAROSSERIEDACH EINES FAHRZEUGS
PARTITIONING ARRANGEMENT FOR A LONGITUDINAL COMPARTMENT FOR THE BODY ROOF OF A VEHICLE

(30) Priorité: 13.10.2014 FR 1459779
(43) Date de publication de la demande: 23.08.2017
(73) Titulaire: PSA Automobiles SA, 78300 Poissy (FR)
(72) Inventeur: KERVAREC, Florian, F-91310 Longpont sur Orge (FR); DUVIVIER, Arnaud, F-91120 Palaiseau (FR); COPEL, Johan, F-94140 Alfortville (FR); KHODEIR, Oussama, F-75012 Paris (FR); ROUSSEAU, Frederic, 28320 Gallardon (FR)
(86) Numéro de dépôt international: PCT/FR2015/052719
(87) Numéro de publication internationale: WO 2016/059327

(56) Documents cités:
- EP-A2- 1 514 734
- WO-A1-2011/015742
- DE-C- 885 061
- US-A1- 2008 136 218

## Description

L'invention concerne un agencement de cloisonnement d'un coffre longitudinal placé sous le pavillon de toit d'un véhicule. Cet agencement de cloisonnement permet d'aménager à la demande l'espace de rangement du coffre longitudinal.

Il est connu de réaliser des coffres de rangement montés au niveau des pavillons des véhicules. Ces coffres possèdent des espaces de rangements inamovibles et constants. De plus, ils sont montés à demeure, si bien qu'ils occupent un volume important dans l'habitacle du véhicule même s'ils ne sont pas utilisés.

Dans l'état de la technique, le document FR2796607 décrit un coffre de rangement disposé sur le pavillon du véhicule. Le coffre de rangement est aussi bien accessible de l'intérieur que de l'extérieur du véhicule. Le document FR2796606 décrit un pavillon de véhicule comprenant un coffre de rangement placé du côté intérieur du véhicule. Le coffre de rangement s'étend longitudinalement par rapport au véhicule et est plus particulièrement adapté aux véhicules de type monospace. Le document EP 1 514 734 A2 décrit un agencement correspondant au préambule de la revendication 1. On comprend bien que ces éléments de coffres encombrent le pavillon et peuvent gêner les passagers notamment ceux de grande taille. De plus, en cas de freinage brutal voire de collision, les passagers peuvent se cogner contre les éléments de coffre ayant un encombrement important et immuable. Néanmoins, des coffres de rangement moins large ont été développés pour n'occuper que la partie centrale longitudinale du véhicule. Ces coffres présentent l'inconvénient d'être moins logeable qu'un coffre intégral, recouvrant la majeure partie du pavillon. Ces coffres possèdent des volumes de rangements successifs compartimentés et fermés par des trappes ne permettant pas de ranger des objets allongés tel que par exemple, un parapluie. Par ailleurs, un coffre longitudinal doit être compartimenté afin d'éviter les déplacements intempestifs des objets stockés à l'intérieur, lors de la conduite du véhicule.

L'invention a pour objectif de palier les inconvénients de l'art antérieur en proposant un agencement de rangement additionnel d'un coffre placé sous le pavillon d'un véhicule permettant de fournir des espaces de rangements complémentaires d'objets.

A cet effet l'invention propose un agencement d'un élément de rangement d'un coffre longitudinal central placé sous un pavillon d'un véhicule, l'élément de rangement ne comportant qu'un seul volume sur sa longueur, ses parois latérales étant ouvertes pour former une échancrure et ses parois d'extrémités fermées, et en ce que de plus l'élément de rangement comporte des moyens de séparation transversaux amovibles

Avantageusement, l'élément de rangement possède une section longitudinale de fond en forme de U.

Selon un autre mode de réalisation de l'invention, les moyens de cloisonnements sont immobilisés dans des moyens de maintien longitudinaux ménagés sur le rebord de l'extrémité des branches de la section en U.

De manière optionnelle, les moyens de maintien longitudinaux sont des glissières en té ou des glissières crantées.

Selon un mode de réalisation préféré de l'invention, les moyens de cloisonnements sont constitués par un filet élastique maintenu entre deux mats, la base des mats comportant un bloc patins apte à coulisser et à se bloquer dans la glissière en T dans une position transversale ou oblique.

Selon une variante, les moyens de cloisonnements sont constitués par un jeu de plaques rigides montées chacune sur un mat, et aptes à coulisser entre elles pour prendre une position transversale ou oblique.

Avantageusement, les moyens de cloisonnements sont constitués par une plaque rigide comportant à ses extrémités inférieures des aménagements agencés pour se bloquer transversalement dans les encoches de la glissière crantée.

De façon avantageuse, les moyens de cloisonnements comportent une base obturant l'espace résiduel entre les branches du fond en U.

Selon une variante, le bloc patin comporte un bouton de verrouillage déverrouillage permettant d'assurer un déplacement du moyen de séparation et son immobilisation dans une position quelconque de la glissière en té.

L'invention concerne également un véhicule automobile comprenant un agencement longitudinal central placé sous un pavillon d'un véhicule, ayant les caractéristiques susmentionnées.

L'invention sera bien comprise et d'autres aspects et avantages apparaîtront clairement à la lecture de la description qui suit donnée à titre d'exemple par rapport aux figures annexées sur lesquelles :
- la figure 1 présente une vue de dessus en perspective et en transparence d'un agencement d'un élément de rangement disposé sous le pavillon de véhicule, comportant des moyens de cloisonnement ;
- la figure 2 présente une vue en perspective d'un agencement d'un élément de rangement disposé sous le pavillon de véhicule, comportant des moyens de cloisonnement ;
- la figure 3 présente une vue en perspective d'un agencement de rangement comportant un premier mode de réalisation d'un cloisonnement et la vue 3A montrant les détails du bloc patin ;
- la figure 4 présente une vue en perspective d'un agencement de rangement comportant un second mode de réalisation d'un cloisonnement et la vue 4A montrant des détails de sa conception ;
- la figure 5 présente une vue en perspective d'un agencement de rangement comportant un troisième mode de réalisation d'un cloisonnement ;
- la figure 6 présente une vue en perspective d'un agencement de rangement comportant un quatrième mode de réalisation d'un cloisonnement et la vue 6A montrant le cloisonnement d'un élément de rangement.

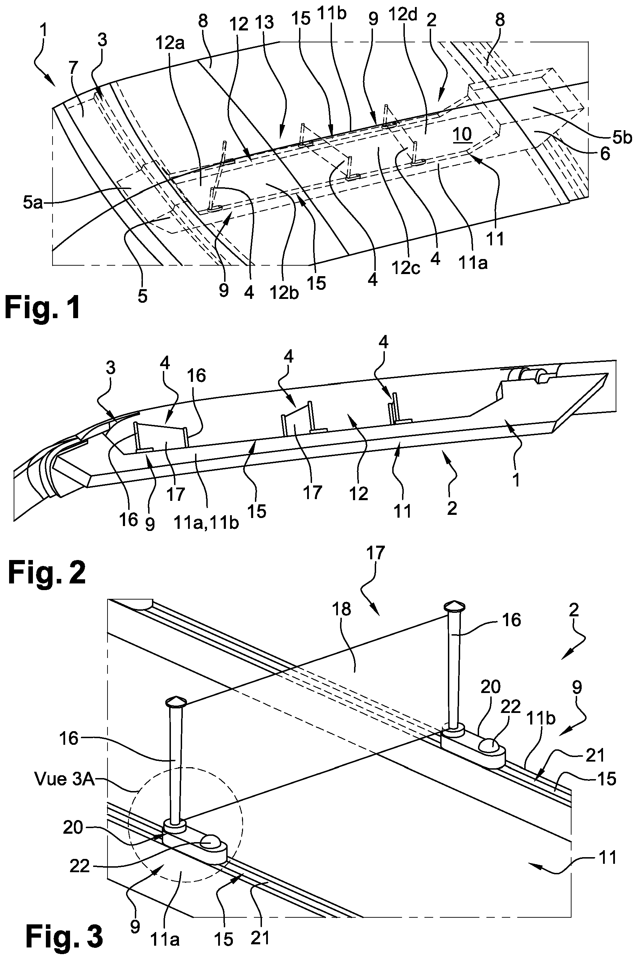

La figure 1 présente une vue de dessus en perspective et en transparence d'un agencement 1 d'un élément de rangement 2 disposé sous le pavillon 3 de véhicule, comportant des moyens de cloisonnement 4. L'élément de rangement 2 constitue un coffre longitudinal comportant une paroi de fond 10 dont la section transversale forme un U 11, dans sa partie courante. Les extrémités longitudinales 5, 6 sont fermées et se prolongent en biseau vers le pavillon 3. La partie courante en U 11 est dépourvue de paroi latérale et de paroi de plafond, l'absence de paroi latérale forme une échancrure 13 par laquelle l'utilisateur peut introduire les objets à déposer dans l'élément de rangement 2. Seules les extrémités possèdent une paroi de plafond 5a, 5b pour la fixation du coffre de rangement sur les traverses 7, 8 du pavillon 3 du véhicule. De ce fait, l'élément de rangement 2 ne dispose que d'un seul volume 12 relativement important. Si le véhicule est équipé d'un toit vitré 8, la luminosité est garantie dans le coffre de rangement 2. On comprend que la dépose d'objet dans l'élément de rangement 2 peut poser des problèmes lorsque le véhicule est utilisé, les objets pouvant se déplacer au gré des mouvements et ou du freinage accélération du véhicule. Il a donc été prévu des moyens de cloisonnements 4 afin de délimiter les zones de stockage 12a, 12b, 12c, 12d et confiner les objets déposés pour éviter les déplacements. Les moyens de cloisonnements 4 peuvent être placés transversalement sur la paroi de fond 10 en U 11 ou obliquement selon le souhait de l'utilisateur. Avantageusement, les moyens de cloisonnements 4 sont fixés de façon déplaçables sur des moyens de maintien 9 longitudinaux ménagés dans les rebords 15 des branches 11a, 11b de la paroi en U 11. Les moyens de maintiens 9 sont constitués par des glissières en T ou des glissières crantées (non visible sur la figure).

La figure 2 présente une vue de profil d'un agencement 1 de d'un élément de rangement 2 disposé sous le pavillon 3 de véhicule, comportant des moyens de cloisonnement 4. Le volume 12 destiné au rangement est séparé par des moyens de cloisonnement 4. Les moyens de cloisonnement 4 sont fixés Les moyens de maintiens 9 matérialisés par des mats 16 sur le rebord 15 des branches 11a, 11b de la paroi en U 11. Les mats 16 sont reliés entre eux par une paroi adaptée 17. Cette paroi 17 peut être constituée de différente matière et construction comme cela sera expliqué ci-après.

La figure 3 présente une vue en perspective d'un agencement d'élément de rangement 2 comportant un premier mode de réalisation d'un cloisonnement 17 et la vue 3A montrant les détails du bloc patin 20 monté à l'extrémité inférieure d'un mat 16. Les mats 16 coopèrent avec les moyens de maintiens 9 par leurs fixations, sur le bloc patin 20 montés coulissants dans la rainure en té 21, ménagée dans les rebords 15 des branches 11a, 11b de la paroi en U 11. Les mats 16 sont reliés entre eux par un filet 18 dont la hauteur est égale à la hauteur des mats 16. Le filet 18 en lui-même peut être extensible ou encore un enrouleur peut être prévu autour d'un mat 16. Le coulissement des blocs patins 16 est obtenu par poussée sur le bouton 22 de verrouillage déverrouillage, pour le libérer de son immobilisation et permet de disposer le moyen de cloisonnement 4 selon le souhait de l'utilisateur soit transversalement soit obliquement. La vue 3A montre le bloc patin 20 immobilisé dans la rainure 21, plus spécifiquement en coupe au niveau du bouton 22. Le bouton 22 comprend une tête 23 logée dans un lamage 24 du bloc patin 20, la tête 23 est prolongée par une tige solidaire 27 d'un patin 25 en prise dans la rainure en té 21. Un ressort de compression 26 intercalé ente le fond du lamage 24 et la tête 23 permet au patin 25 d'adhérer sur les parois supérieures de la rainure 21 et d'assurer constamment l'immobilisation du bloc patin 20. Le déblocage est effectué en exerçant une pression constante sur le bouton 22, afin de le déplacer. Le relâchement de la pression sur le bouton 22 permet d'immobiliser le bloc patin 20.

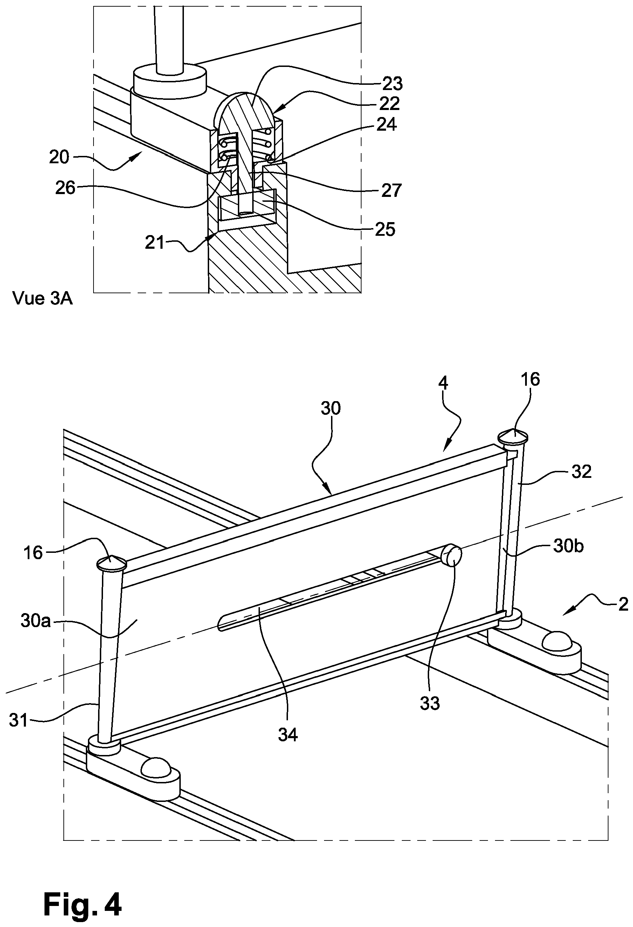

La figure 4 présente une vue en perspective d'un agencement de rangement 2 comportant un second mode de réalisation d'un moyen de cloisonnement 4 et la vue 4A montrant des détails de sa conception. Les mats 16 sont reliés l'un à l'autre par une cloison rigide 30. Cette cloison 30 est constituée de deux plaques 30a, 30b coopérant ensembles. Chaque plaque 30a, 30b comporte à une extrémité un fourreau 31, 32 monté rotatif sur les mats 16. Les plaques 30a, 30b sont maintenus entres elles par un rivet 33 susceptible de coulisser dans une rainure horizontale 34, comme on le montre sur la vue 4A. Sur la vue la plaque 30a coulisse dans la plaque 30b, ce qui permet de les rendre extensible l'une par rapport à l'autre. Les mats 16 supportant les fourreaux 31, 32 sont montés sur les blocs patins 20 et fonctionnent à l'identique de la figure 3.

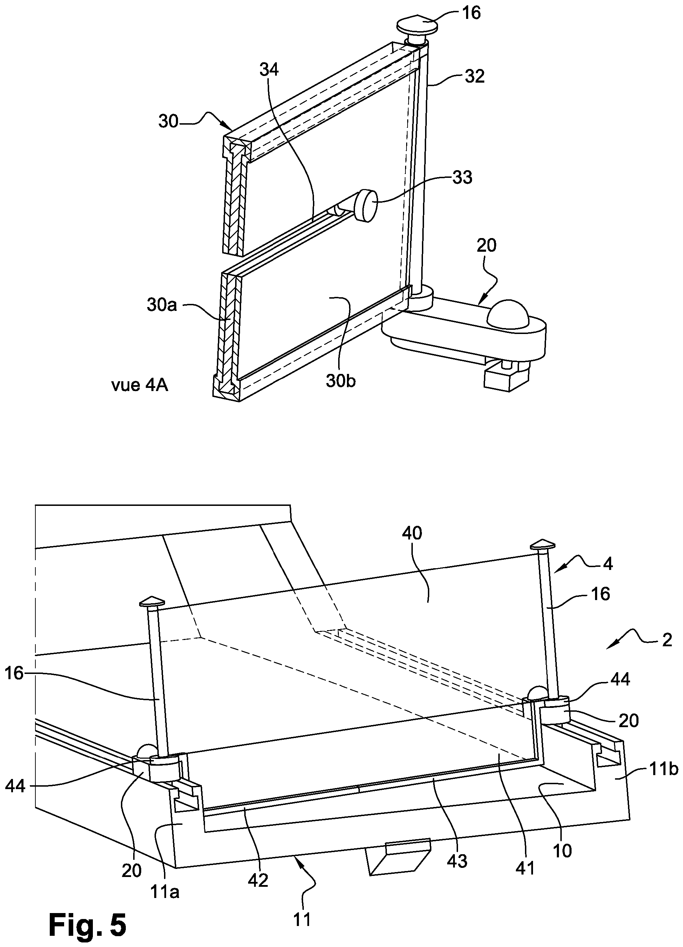

La figure 5 présente une vue en perspective d'un agencement d'un élément de rangement 2 comportant un troisième mode de réalisation d'un moyen de cloisonnement 4. Ce mode de réalisation comporte un filet 40 constitué comme celui décrit à la figure 3. De plus, le filet 40 comporte une base 41 obturant l'espace résiduel entre les branches 11a, 11b du fond 10 en U 11. La base 41 du filet 40 est fixée sur deux tiges profilées 42, 43 dont les extrémités en contact avec la paroi de fond 10 sont agencées pour coulisser l'une dans l'autre. Les tiges 42 43 épousent l'intérieur de la forme en U 11 dont l'extrémité se termine par une bague 44 monté sur les mats 16 et reposant sur le bloc patin 20. Cette conception du moyen de séparation permet d'installer le moyen de cloisonnement 4 aussi bien transversalement qu'obliquement puisque le filet 40 et sa base 41 sont extensibles.

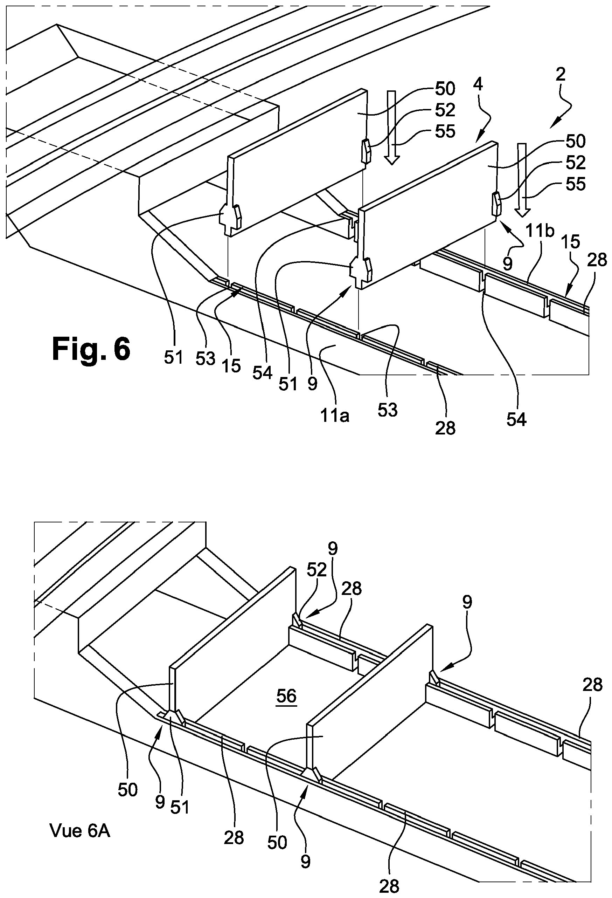

La figure 6 présente une vue en perspective d'un agencement d'élément de rangement 2 comportant un quatrième mode de réalisation d'un cloisonnement 4 et la vue 6A montrant le mode de cloisonnement d'un élément de rangement 2. Ce mode de réalisation est constitué d'une plaque rigide 50 comportant des moyens de maintiens 9, matérialisés à chacune de ses extrémités inférieures par des aménagements sous forme de taquet 51, 52 agencés pour se bloquer transversalement dans des encoches 53, 54 de la glissière crantée 28. Les crans 28 sont aménagés à des intervalles réguliers le long de la bordure 15 et placés en vis-à-vis en regard des branches 11a, 11b. Cette configuration implique que la plaque rigide 50 est introduite verticalement suivant la flèche 55 et ne peut prendre qu'une disposition transversale. Plusieurs jeux de plaques 50 permettent de délimiter des casiers 56 comme montré sur la vue 6A.

## Revendications

1. Agencement (1) d'un élément de rangement (2) 'un coffre longitudinal central placé sous un pavillon (3) d'un véhicule, **caractérisé en ce que** l'élément de rangement (2) ne comporte qu'un seul volume (12) sur sa longueur, ses parois latérales étant ouvertes pour former une échancrure (13) et ses parois d'extrémités (5, 6) étant fermées, et **en ce que** l'élément de rangement (2) comporte de plus des moyens de cloisonnements transversaux amovibles (4) .

2. Agencement (1) selon la revendication 1, **caractérisé en ce que** l'élément de rangement (2) possède une section longitudinale de fond (10) en forme de U (11).

3. Agencement (1) selon la revendication 1, **caractérisé en ce que** les moyens de cloisonnements (4) sont immobilisés dans des moyens de maintien (9) longitudinaux ménagés sur le rebord (15) de l'extrémité des branches (11a, 11b) de la section en U (11).

4. Agencement (1) selon la revendication 3, **caractérisé en ce que** les moyens de maintien (9) longitudinaux sont des glissières en té (21) ou des glissières crantées (28).

5. Agencement (1) selon l'une quelconque des revendications 1 ou 3, **caractérisé en ce que** les moyens de cloisonnements (4) sont constitués par un filet élastique (18) maintenu entre deux mats (16), la base des mats (16) comportant un bloc patins (20) apte à coulisser et à se bloquer dans la glissière en T (21) dans une position transversale ou oblique.

6. Agencement (1) selon l'une quelconque des revendications 1 ou 3, **caractérisé en ce que** les moyens de cloisonnements (4) sont constitués par un jeu de plaques rigides (30a, 30b) montées chacune sur un mat (16), et apte à coulisser entre elles pour prendre une position transversale ou oblique.

7. Agencement (1) selon l'une quelconque des revendications 1 ou 3, **caractérisé en ce que** les moyens de cloisonnements (4) sont constitués par une plaque rigide (50) comportant à ses extrémités inférieures des aménagements sous forme de taquets (51, 52) agencés pour se bloquer transversalement dans les encoches (53, 54) de la glissière crantée (28) .

8. Agencement (1) selon la revendication 5, **caractérisé en ce que** les moyens de cloisonnements (4) comportent une base (41) obturant l'espace résiduel entre les branches (11a, 11b) du fond (10) en U (11) .

9. Agencement (1) selon la revendication 5, **caractérisé en ce que** le bloc patin (20) comporte un bouton (22) de verrouillage déverrouillage permettant d'assurer un déplacement du moyen de cloisonnement (4) et son immobilisation dans une position quelconque de la glissière en té (21).

10. Véhicule automobile comprenant un agencement d'un élément de rangement (2) d'un coffre longitudinal central placé sous un pavillon (3) d'un véhicule, selon l'une quelconque des revendications 1 à 9.

## Patentansprüche

1. Einrichtung (1) eines Lagerelements (2) eines zentralen Längskofferraums, der unter einem Dach (3) eines Fahrzeugs platziert ist, **dadurch gekennzeichnet, dass** das Lagerelement (2) auf seiner Länge nur ein einziges Volumen (12) umfasst, wobei seine Seitenwände offen sind, um einen Ausschnitt (13) zu bilden, und seine Endwände (5, 6) geschlossen sind, und dass das Lagerelement (2) außerdem abnehmbare Quertrennmittel (4) umfasst.

2. Einrichtung (1) nach Anspruch 1, **dadurch gekennzeichnet, dass** das Lagerelement (2) einen Bodenlängsschnitt (10) in U-Form (11) umfasst.

3. Einrichtung (1) nach Anspruch 1, **dadurch gekennzeichnet, dass** die Trennmittel (4) in Längshaltemitteln (9), die auf dem Rand (15) des Endes der Schenkel (11a, 11b) des U-Querschnitts (11) eingerichtet sind, stillgestellt sind.

4. Einrichtung (1) nach Anspruch 3, **dadurch gekennzeichnet, dass** die Längshaltemittel (9) T-förmige Gleitschienen (21) oder gezahnte Gleitschienen (28) sind.

5. Einrichtung (1) nach einem der Ansprüche 1 oder 3, **dadurch gekennzeichnet, dass** die Trennmittel (4) aus zwei elastischen Netzen (18) bestehen, die zwischen zwei Ständern (16) gehalten werden, wobei die Basis der Ständer (16) einen Kufenblock (20) umfasst, der geeignet ist, um zu gleiten und sich in der T-Gleitschiene (21) in einer Quer- oder Schrägposition zu blockieren.

6. Einrichtung (1) nach einem der Ansprüche 1 oder 3, **dadurch gekennzeichnet, dass** die Trennmittel (4) aus einem Satz starrer Platten (30a, 30b) bestehen, die jeweils auf einen Ständer (16) montiert und geeignet sind, um zwischen einander zu gleiten, um eine Quer- oder Schrägposition einzunehmen.

7. Einrichtung (1) nach einem der Ansprüche 1 oder 3, **dadurch gekennzeichnet, dass** die Trennmittel (4) aus einer starren Platte (50) bestehen, die an ihren unteren Enden Einrichtungen in Form von Ansätzen (51, 52) umfasst, die eingerichtet sind, um sich quer in den Kerben (53, 54) der gezahnten Gleitschienen (28) zu blockieren.

8. Einrichtung (1) nach Anspruch 5, **dadurch gekennzeichnet, dass** die Trennmittel (4) eine Basis (41) umfassen, die den restlichen Raum zwischen den Schenkeln (11a, 11b) des Bodens (10) in U (11) verschließen.

9. Einrichtung (1) nach Anspruch 5, **dadurch gekennzeichnet, dass** der Kufenblock (20) einen Knopf (22) zum Verriegeln/Entriegeln umfasst, der es erlaubt, eine Bewegung des Trennmittels (4) und sein Stillstellen in einer beliebigen Position der T-Gleitschiene (21) sicherzustellen.

10. Kraftfahrzeug, das eine Einrichtung eines Lagerelements (2) eines zentralen Längskofferraums, der unter einem Dach (3) eines Fahrzeugs eingerichtet ist, nach einem der Ansprüche 1 bis 9, umfasst.

## Claims

1. An arrangement (1) of a storage element (2) of a central longitudinal compartment placed beneath a body roof (3) of a vehicle, **characterized in that** the storage element (2) comprises only a single volume (12) over its length, its lateral walls being open so as to form a recess (13) and its end walls (5, 6) being closed, and **in that** the storage element (2) comprises, in addition, removable transverse partitioning means (4).

2. The arrangement (1) according to Claim 1, **characterized in that** the storage element (2) has a longitudinal base section (10) having a U-shape (11).

3. The arrangement (1) according to Claim 1, **characterized in that** the partitioning means (4) are immobilized in longitudinal retaining means (9) arranged on the edge (15) of the end of the branches (11a, 11b) of the U-section (11).

4. The arrangement (1) according to Claim 3, **characterized in that** the longitudinal retaining means (9) are T-slides (21) or notched slides (28).

5. The arrangement (1) according to any one of Claims 1 or 3, **characterized in that** the partitioning means (4) are constituted by an elastic net (18) held between two posts (16), the base of the posts (16) comprising a runner block (20) able to slide and to become locked in the T-slide (21) in a transverse or oblique position.

6. The arrangement (1) according to any one of Claims 1 or 3, **characterized in that** the partitioning means (4) are constituted by a set of rigid plates (30a, 30b) each mounted on a post (16) and able to slide between them to take up a transverse or oblique position.

7. The arrangement (1) according to any one of Claims 1 or 3, **characterized in that** the partitioning means (4) are constituted by a rigid plate (50) comprising at its lower ends arrangements in the form of catches (51, 52) arranged so as to become locked transversely in the recesses (53, 54) of the notched slide (28).

8. The arrangement (1) according to Claim 5, **characterized in that** the partitioning means (4) comprise a base (41) closing the residual space between the branches (11a, 11b) of the base (10) having a U-shape (11).

9. The arrangement (1) according to Claim 5, **characterized in that** the runner block (20) comprises a locking/unlocking button (22) permitting the execution of a displacement of the partition means (4) and its immobilizing in any position of the T-slide (21) .

10. A motor vehicle including an arrangement of a storage element (2) of a central longitudinal compartment placed beneath a body roof (3) of a vehicle, according to any one of Claims 1 to 9.
